# EUROPÄISCHE PATENTANMELDUNG

(11) **EP 3 882 623 A1**
(43) Veröffentlichungstag der Anmeldung: **22.09.2021**
(21) Anmeldenummer: 20163300.5
(22) Anmeldetag: 16.03.2020
(51) Int. Cl.: G01N 27/90, G01N 27/82

(54) **PRÜFVERFAHREN UND PRÜFSYSTEM ZUR ZERSTÖRUNGSFREIEN PRÜFUNG**

(71) Anmelder: Magnetische Prüfanlagen GmbH, 72766 Reutlingen (DE)
(72) Erfinder: SCHANZ, Christoph, 72636 Frickenhausen (DE); SIMMERT, Steve, 72144 Dußlingen (DE); SCHMITZ, Manfred, 72135 Dettenhausen (DE); WIDMANN, Stefan, 72379 Hechingen (DE)
(74) Vertreter: Patentanwälte Ruff, Wilhelm, Beier, Dauster & Partner mbB

(57) **Zusammenfassung**

Bei einem Prüfverfahren zur zerstörungsfreien Prüfung eines Prüflings (150) wird eine Oberfläche (155) des Prüflings in einem Oberflächenbereich zur Erfassung von ortsabhängigen Prüfsignalen mittels wenigstens einer Prüfsonde (120) abgetastet. Aus den Prüfsignalen für eine Vielzahl von Flächenelementen (156) des Oberflächenbereichs wird eine entsprechende Vielzahl zugeordneter Prüfdaten ermittelt. Prüfdaten aus dem Oberflächenbereich werden zur Charakterisierung wenigstens einer prüfrelevanten Eigenschaft des Prüflings (150) ausgewertet. Die Auswertung umfasst eine statistische Analyse der Prüfdaten, bei der aus den ortsabhängig ermittelten Prüfdaten für eine Vielzahl von Flächenelementen innerhalb des Oberflächenbereichs wenigstens ein statistischer Kennwert ermittelt wird. Der statistische Kennwert oder eine daraus abgeleitete Information wird zur Charakterisierung des Prüflings ausgegeben.

## Beschreibung

### ANWENDUNGSGEBIET UND STAND DER TECHNIK

Die Erfindung betrifft ein Prüfverfahren zur zerstörungsfreien Prüfung eines Prüflings gemäß dem Oberbegriff von Anspruch 1 sowie ein zur Durchführung des Prüfverfahrens geeignetes Prüfsystem gemäß dem Oberbegriff von Anspruch 11. Ein bevorzugtes Anwendungsgebiet ist die Prüfung mittels Detektion von Oberflächeneigenschaften, wie z.B. Schleifbrand und/oder Oberflächenrauheit, mit einem Wirbelstromprüfsystem.

Bei der Bearbeitung von mechanischen Bauteilen werden vielfach Schleifprozesse für die Oberflächenbearbeitung eingesetzt. Wenn ein Schleifprozess aufgrund von z.B. zu hohen Anpresskräften, zu schnellen Drehzahlen und/oder abgenutzten Schleifbändern nicht beherrscht ist, kann das zu einem sogenannten "Schleifbrand" ("Grinding Burn") führen. Der Schleifbrand entsteht durch lokale Überhitzung bei ggf. hohen Presskräften. Der Schleifbrand wirkt sich in einer lokalen Veränderung des Gefüges und damit lokalen Veränderungen der Gefügeeigenschaften aus. Bauteile mit Schleifbranderscheinungen sind problematisch, da sie in der Anwendung zu Feldausfällen führen können. Um dieses Ausfallrisiko zu minimieren, werden in der Fertigung verschiedene Möglichkeiten implementiert, um Schleifbrand zu erkennen und das Material auszusortieren und entsprechend die Prozesse neu einzustellen.

In vielen Produktionslinien werden Nitalätzprozesse eingeführt, in denen Musterteile aus der Produktion untersucht werden. Schleifbrand führt neben der beschriebenen lokalen Gefügeveränderung zu zusätzlichen mechanischen Spannungen. Diese mechanischen Spannungen können durch das Anätzen mit Nital "sichtbar" gemacht werden. Der Nitalätzprozess ist ein zerstörendes Verfahren und führt dazu, dass das untersuchte Bauteil Ausschuss ist. Diese Untersuchung kann zudem nur für eine exemplarische Untersuchung, nicht aber zu einer 100% Prüfung verwendet werden. Weiterhin sind Nitalätzprozessanlagen sehr teuer in der Beschaffung, auch führen Sie zu sehr langen Wartezeiten (bis zu mehreren Stunden) in der Produktion, wenn das Ergebnis die Voraussetzung zur Prozessfreigabe ist. Zusammengefasst ist diese Methode keine 100% Prüfung, dauert sehr lange und führt sehr hohe Kosten mit sich.

Für die Schleifbrandprüfung gibt es auch zerstörungsfrei arbeitende magnetische Prüfverfahren, die auf der Analyse des Barkhausenrauschens basieren. Legt man ein äußeres magnetisches Feld an einen ferromagnetischen Werkstoff an und erhöht langsam die Feldstärke, so steigt die Magnetisierung nicht stetig, sondern in kleinen Differenzen, den sogenannten Barkhausen-Sprüngen. Die Magnetisierungskurve ist also nicht glatt, sondern enthält inkrementelle Änderungen (Sprünge). Wird eine Spule nahe der Oberfläche des Werkstücks platziert, so wird durch die Sprünge in der Spule ein pulsähnliches Signal erzeugt. Solche in ferromagnetischem Material erzeugten Impulse bilden ein rauschähnliches Signal mit breitem Spektrum, das sogenannte "Barkhausenrauschen". Die Mikrostruktur eines Bauteils und Restspannungen an dessen Oberfläche können durch Messungen der Intensität des Barkhausenrauschens ausgewertet werden.

Eine weitere Möglichkeit, Schleifbrand zu erkennen, stellt die Wirbelstromprüfung dar. Diese kann bei allen elektrisch leitfähigen Materialien eingesetzt werden.

Die Firma Innotest AG verweist auf ihrer Homepage unter der URL: www.innotest.ch/applikationen/schleifbrand-mit-wirbelstrom-nachweisen auf einen im Jahre 2000 präsentierten Vortrag mit dem Titel: "WS Prüfsystem zum Nachweis von Schleiffehlern an Nockenscheiben" von P. Kreier; R. Becker, Ch. Rodner und H. Flückiger. Darin wird ein Wirbelstrom (WS)-Prüfsystem beschrieben, mit dem Schleifbrand an Prüflingen in Form von Nocken detektiert werden kann. Der Prüfling wird dazu in Rotation versetzt und mit Wirbelstromsonden abgetastet. Während der Drehbewegung des Prüfteils werden die Signale der drei Messkanäle aufgezeichnet und auf einem Bildschirm dargestellt und sofort nach Beendigung der Datenaufnahme über positionsabhängige einstellbare Schwellen und/oder Referenzsignalkurven mit KANAL N (= 1, 2, 3) OK / NOK (Not OK) oder SYSTEM NOK die Prüfaussage optisch auffällig am Bildschirm ausgegeben.

Die Firma igb Prüfcomputer GmbH beschreibt auf ihrer Homepage (www.ibgndt.de/) ebenfalls die Nutzung von Wirbelstrom-Prüfsystemen zur Detektion von Schleifbrand. Beschrieben werden digitale Wirbelstrom-Prüfgeräte für die zerstörungsfreie Prüfung von Komponenten, Massenteilen und Halbzeugen aus metallischen Werkstoffen auf Risse, Poren und Schleifbrand nach dem Präventiven Mehr-Filter Prüfverfahren (PMFP). Die genannten digitalen Rissprüfgeräte sollen eine gleichzeitige 100% Inline-Detektion von Schleifbrand und Rissen in einer Produktionslinie bieten. Durch automatisch generierte 360°-Toleranzfelder, die Prüfung über 30 simultane Bandpassfilter und eine proprietäre Gutteil-Referenzierung sollen auch Fehler gefunden werden können, die herkömmliche Geräte mit Fehler-orientierter Kalibrierung übersehen.

Nach den Erkenntnissen der Erfinder kann Schleifbrand von einer sehr schwachen Ausprägung bis zu einer sehr starken Ausprägung variieren. Durch diese herkömmlichen Methoden kann dieser mit den bisher angewendeten Verfahren nicht sicher durch die Wirbelstromprüfung detektiert werden. Insbesondere bei Bauteilen, bei denen der Schleifbrand sich vollflächig ausbildet, oder sich so ausbildet, dass ein scharfer Übergang zu nicht betroffenen Bereichen nicht stattfindet, kann es sehr schwierig werden, den Schleifbrand zu detektieren. Ein eindeutiger Nachweis kann auch schwierig werden, wenn der Schleifbrand sich nur leicht abbildet und so schwach detektiert wird, dass eine vorgegebene Schwelle nicht überschritten wird.

### AUFGABE UND LÖSUNG

Vor diesem Hintergrund liegt der Erfindung die Aufgabe zugrunde, ein Prüfverfahren und ein Prüfsystem zur zerstörungsfreien Prüfung von Prüflingen bereitzustellen, die in der Lage sind, an Prüflingen flächig ausgedehnte oberflächennahe Ungänzen, wie z.B. Schleifbrand und/oder Oberflächenrauheit und/oder lokale Gefügefehler, wie z.B. Hardspots und Softspots, zuverlässig zu detektieren und mit hoher Unterscheidungsfähigkeit bzw. Diskriminationsfähigkeit funktionskritische Materialstörungen von funktional unkritischen zu unterscheiden.

Zur Lösung dieser und anderer Aufgaben stellt die Erfindung ein Prüfverfahren mit den Merkmalen von Anspruch 1 sowie ein Prüfsystem mit den Merkmalen von Anspruch 11 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einer Formulierung betrifft die Erfindung ein Prüfverfahren zur zerstörungsfreien Prüfung eines Prüflings. Bei dem Prüfling kann es sich beispielsweise um ein rotationssymmetrisches Bauteil wie z.B. eine Welle, eine Bremsscheibe, eine Nockenwelle, einen Kugellagerring, eine Kugel eines Kugellagers o.dgl. aus einem elektrisch leitfähigen, z.B. einem metallischen Material handeln. Es ist auch möglich, das Verfahren auf eine Platte oder ein anderes Bauteil mit einer mehr oder weniger ebenen, zu prüfenden Oberfläche anzuwenden.

Bei dem Verfahren wird eine Oberfläche des Prüflings in einem Oberflächenbereich zur Erfassung von ortsabhängigen Prüfsignalen mittels wenigstens einer Prüfsonde abgetastet. Der Begriff "abtasten" wird hier im Sinne einer Scan-Operation gebraucht, bei der im Rahmen einer Flächenprüfung nebeneinanderliegende Flächenelemente einer größeren Fläche vorzugsweise berührungslos abgetastet und dadurch einzeln oder gruppenweise zeitlich nacheinander geprüft werden. Der zweidimensional ausgedehnte Oberflächenbereich umfasst dabei in der Regel nur einen besonders interessierenden Teil der gesamten Oberfläche des Prüflings, es kann jedoch auch die gesamte Oberfläche abgetastet werden.

Bei dem Verfahren werden die Prüfsonde und der Prüfling relativ zueinander bewegt, so dass die Prüfsonde sich entlang einer vorgegebenen Prüfspur über die Oberfläche bewegt. Dabei wird der Oberflächenbereich vorzugsweise lückenlos abgetastet, indem benachbarte Prüfspuren entweder unmittelbar aneinander angrenzen oder einander teilweise überlappen. Aus den Prüfsignalen für eine Vielzahl von Flächenelementen des Oberflächenbereichs wird eine entsprechende Vielzahl zugeordneter Prüfdaten ermittelt. Die Prüfdaten enthalten dabei diejenige Information, die sich durch die Prüfsonde erfassen lässt und die den Flächenelementen individuell zugeordnet werden kann. Die Prüfdaten bilden die einer weiteren Verarbeitung zugänglichen Rohdaten.

Die Ortsauflösung des Prüfverfahrens beschreibt einen räumlichen Abstand innerhalb eines gemessenen Signals, bei dem zwei unterschiedliche Signale noch getrennt werden können. Die Ortsauflösung korreliert mit der Größe der Flächenelemente bzw. mit der Anzahl der Flächenelemente pro Flächeneinheit. Diese Werte können variieren und sind z.B. abhängig von der Prüfbreite der verwendeten Prüfsonde und von den erwarteten Fehlerdimensionen (z.B. Fehlerlänge) Die Ortsauflösung kann z.B. im Bereich von einigen Mikrometern bis zum Millimeterbereich liegen.

Abhängig von der Art der Prüfsonde können Prüfdaten in unterschiedlicher Form vorliegen. Bei der Wirbelstromprüfung mit Wirbelstromsonden können die Prüfdaten z.B. beschrieben werden als Information zur Phase oder Amplitude einer Differenzsonde, aber auch als Phase oder Amplitude einer Absolutsonde, ggf. auch als Leitfähigkeitswert oder als Resultat einer Oberwellenanalyse, die einen Bezug auf den ferromagnetischen Anteil hat. Andere Prüfverfahren, z.B. die Ultraschallprüfung, können Prüfdaten mit anderem Informationsgehalt bereitstellen.

Die Prüfdaten aus dem Oberflächenbereich werden zur Charakterisierung wenigstens einer prüfrelevanten Eigenschaft des Prüflings ausgewertet bzw. verarbeitet. Dabei können alle Prüfdaten oder auch nur eine Teilmenge der Prüfdaten ausgewertet werden. Als prüfrelevante Eigenschaft können z.B. das Ausmaß und/oder eine räumliche Verteilung von Schleifbrand an der Prüflingsoberfläche in Betracht kommen.

Das Prüfverfahren ist somit ein Verfahren, das eine ortsauflösende Flächenprüfung bzw. Flächenanalyse in einem zweidimensional ausgedehnten Oberflächenbereich des Prüflings erlaubt. Da die Prüfdaten den Flächenelementen des Oberflächenbereichs zugeordnet sind, sind die Prüfdaten prinzipiell zur Erzeugung eines Abbilds des Oberflächenbereichs nutzbar. Es handelt sich somit um ein zur Bildgebung geeignetes Prüfverfahren, also um ein Prüfverfahren, das Prüfdaten generiert, die zur Bildgebung genutzt werden können. Das Prüfverfahren kann als bildgebendes Verfahren ausgestaltet sein, welches aus den mithilfe der Prüfsonde erfassten Prüfsignalen ein Abbild erzeugt, indem die Prüfsignale oder daraus abgeleitete Informationen ortsaufgelöst zum Beispiel über Helligkeitswerte oder Farben codiert visualisiert werden können. Eine Bilderzeugung ist jedoch nicht zwingend. Wichtig ist, dass die Prüfdaten mehrdimensional ortsaufgelöst auswertbare Information über die durch die Prüfsonde erfassbaren Eigenschaften der Prüflings enthalten.

Eine Besonderheit des Prüfverfahrens besteht darin, dass die Auswertung der Prüfdaten eine statistische Analyse der Prüfdaten umfasst, bei der aus den ortsabhängig ermittelten Prüfdaten für eine Vielzahl von Flächenelementen innerhalb des Oberflächenbereichs wenigstens ein statistischer Kennwert ermittelt wird und bei dem der statistische Kennwert oder eine daraus abgeleitete Information zur Charakterisierung des Prüflings ausgegeben wird.

Die Ausgabe kann so erfolgen, dass eine Anzeigeeinrichtung genutzt wird, um das Ergebnis der Auswertung oder ein Teilergebnis in geeigneter Form zu visualisieren bzw. anzuzeigen. Alternativ oder zusätzlich können Ergebnisse der Auswertung in nachgeschalteten Verarbeitungsstufen weiter verarbeitet werden, z.B. um eine Sortiereinrichtung anzusteuern und/oder um Daten für eine spätere Nutzung in einem Speicher zu speichern

Das Prüfverfahren nutzt Möglichkeiten der deskriptiven Statistik zur Charakterisierung des Prüflings. Die statistischen Kennwerte (einer oder mehrere) haben dabei die Funktion, über gewisse Eigenschaften einer durch die Prüfdaten repräsentierten Merkmalsverteilung summarisch Auskunft zu geben. Statistische Kennwerte wie zum Beispiel eine Standardabweichung, ein arithmetisches Mittel und/oder ein Quantil, können berechnet werden, um eine definierte Menge von Prüfdaten hinsichtlich einer bestimmten Tendenz oder der Dispersion der Prüfdaten zu beschreiben. Mithilfe eines statistischen Kennwerts kann der Oberflächenbereich bzw. ein Teilbereich daraus charakterisiert werden. Daraus lassen sich aussagekräftige Rückschlüsse auf die untersuchte prüfrelevante Eigenschaft des Prüflings ziehen.

Gemäß einer Weiterbildung wird wenigstens ein statistischer Kennwert ermittelt, der einer Standardabweichung der Prüfdaten aus dem Oberflächenbereich oder einer Untergruppe bzw. Stichprobe aus dem Oberflächenbereich entspricht. Die Standardabweichung ist ein Maß für die Streuung bzw. die Streubreite von Daten um einen Mittelwert. Die Standardabweichung beschreibt die Breite der Normalverteilung der der Berechnung zugrunde gelegten Prüfdaten. Je größer die Standardabweichung ist, desto größer ist die Streubreite der Daten. Die Standardabweichung kann für die zugrunde liegende Grundgesamtheit der Prüfdaten, also für alle Prüfdaten aus dem Oberflächenbereich, ermittelt werden oder für eine Untergruppe daraus, die im statistischen Sinne einer Stichprobe der Prüfdaten entspricht. Eine zufällige oder natürliche Streuung von Prüfdaten wird in dieser Anmeldung auch als Rauschen bezeichnet. Ein größeres Rauschen entspricht dabei einer größeren Streubreite der Prüfdaten, während geringes Rauschen bzw. eine geringe Standardabweichung für eine stärkere Gleichmäßigkeit der Prüfdaten spricht.

Statistische Kennwerte (einer oder mehrere) können für alle Prüfdaten ermittelt werden, so dass die zu allen Flächenelementen des Oberflächenbereichs gehörenden Prüfdaten die Grundgesamtheit für die statistische Analyse bilden.

Gemäß einer Weiterbildung werden zweckmäßige Stichproben analysiert, also Untergruppen bzw. Teilmengen der Grundgesamtheit. Dadurch können häufig besonders aussagekräftige Informationen aus der statischen Analyse der Prüfdaten abgeleitet werden. Statistische Kennwerte für Stichproben können untereinander verglichen und/oder gemeinsam in einer Kennwertverteilung zusammengefasst und ggf. ausgegeben werden.

Bei einer Weiterbildung wird wenigstens eine Untergruppe von Prüfdaten analysiert, die Flächenelemente repräsentieren, welche entlang einer Linie innerhalb des Oberflächenbereichs angeordnet sind, um daraus eine Linien-Standardabweichung der Prüfdaten zu ermitteln. Die zugrunde liegende Linie kann einer geraden Linie innerhalb einer Flächendarstellung des Oberflächenbereichs entsprechen, z.B. einer geraden Linie innerhalb einer Abwicklung einer rotationssymmetrischen Oberfläche. Die Linie kann einer Zeile oder einer Spalte in einem Bild des Oberflächenbereichs entsprechen. Eine gerade Linie einer Abwicklung kann einer gekrümmten Linie auf der tatsächlichen Oberfläche entsprechen, z.B. einer kreisförmig gekrümmten Linie. Auf diese Weise kann beispielsweise das Rauschen einer einzelnen Zeile oder einer einzelnen Spalte von Prüfdaten innerhalb eines Rasters ermittelt werden, die mit dem Rauschen anderer Zeilen oder Spalten verglichen werden kann. Ein besonderer Vorteil dieser Variante liegt darin, dass durch die Berechnung der Standardabweichung ein absoluter Fehler unterdrückt wird und nur die relative Änderung der Prüfdaten innerhalb einer Spalte oder Zeile zueinander berücksichtigt wird. Dies hat eine positive Auswirkung auf die Stabilität der Auswertungsmethode.

Vorzugsweise wird für eine Vielzahl von nebeneinander verlaufenden Linien aus dem Oberflächenbereich jeweils eine Linien-Standardabweichung berechnet und die daraus resultierende Gesamtheit von Linien-Standardabweichungen wird zur Ermittlung wenigstens eines statistischen Kennwerts analysiert bzw. ausgewertet. Daraus kann z.B. ein Mittelwert und/oder ein Median und/oder ein anderes Quantil der Linien-Standardabweichungen und/oder deren Minimalwert und/oder Maximalwert ermittelt und zur Charakterisierung des Prüflings ausgegeben werden. Meist wird der gesamte Oberflächenbereich in Linien unterteilt und auf diese Weise analysiert. Es ist auch möglich, nur einen Teilbereich oder mehrere Teilbereiche des Oberflächenbereichs auf diese Weise zu analysieren.

Bei einer Weiterbildung wird aus der Gesamtheit von Linien-Standardabweichungen eine Häufigkeitsverteilung der Linien-Standardabweichung ermittelt und zur Charakterisierung des Prüflings ausgegeben. Diese Häufigkeitsverteilung hat sich als sehr aussagekräftiges Maß herausgestellt. Beispielweise kann ein Ausmaß an Ähnlichkeit oder Unähnlichkeit zwischen der für den Prüfling ermittelten Häufigkeitsverteilung der Linien-Standardabweichung und einer allein auf statistischen Variationen beruhenden Normalverteilung quantifiziert und zur Charakterisierung des Prüflings ausgegeben wird, z.B. grafisch in Form eines Diagramms. Daran kann häufig "auf einen Blick" erkannt werden, ob es sich um ein Gutteil oder um ein problematisches Bauteil handelt. Darüber hinaus kann ggf. Information über den spezifischen Charakter der Schädigung erkannt werden, z.B. über die räumliche Verteilung der Schädigung am Prüfling.

Auch kann in einem Diagramm der Normalverteilung eine Grenze gesetzt werden, die z.B. bei dem 2fachen Wert der Standardabweichung liegen kann, und es kann damit definiert werden, welche Flächenelemente oder Linien als "gut" oder als "schlecht" gewertet werden. Weiterhin können diese schlechten Flächenelemente oder Linien anders dargestellt werden als gute Flächenelemente oder Linien, um damit eine qualitative und quantitative Information zu liefern.

Alternativ oder zusätzlich kann vorgesehen sein, dass wenigstens ein statistischer Kennwert ermittelt wird, der einem Mittelwert der Prüfdaten aus dem Oberflächenbereich oder einer Untergruppe bzw. Stichprobe aus dem Oberflächenbereich entspricht. Der Mittelwert ist ein anderer nach einer bestimmten Rechenvorschrift aus den gegebenen Prüfdaten ermittelbarer statistischer Kennwert. Sofern in der vorliegenden Anmeldung nichts Abweichendes beschrieben ist, bezeichnet der Begriff "Mittelwert" hier das arithmetische Mittel bzw. den Durchschnittswert der analysierten Prüfdaten. Der Mittelwert ist ein statistischer Kennwert für die zentrale Tendenz einer Verteilung. Der Mittelwert kann gut mit einem entsprechenden Erwartungswert einer Verteilung verglichen werden, wobei der Erwartungswert aus der theoretisch zu erwartenden Häufigkeit der Prüfdaten ermittelt wird, während der Mittelwert aus den tatsächlich vorliegenden Prüfdaten ermittelt wird.

Ein Mittelwert kann unmittelbar für die der Auswertung zugrunde liegenden, noch nicht statistisch ausgewerteten Rohdaten ermittelt werden. Es ist auch möglich, die Mittelwertbildung für Prüfdaten anzuwenden, die in einer vorgelagerten Auswertungsstufe bereits statistisch ausgewertet wurden. Beispielsweise ist es möglich, eine Gesamtheit von Linien-Standardabweichungen zu analysieren und dafür einen Mittelwert (Mittelwert von Linien-Standardabweichungen) zu ermitteln.

Als weiterer statistischer Kennwert kann alternativ oder zusätzlich für Prüfdaten aus dem Oberflächenbereich oder einer Untergruppe bzw. Stichprobe aus dem Oberflächenbereich ein empirisches p-Quantil (kurz: Quantil oder p-Quantil) für wenigstens einen p-Wert ermittelt werden. Für jede Zahl p zwischen 0 und 1 teilt, vereinfacht dargestellt, ein empirisches p-Quantil (Quantil) die Stichprobe so, dass ein Anteil der Stichprobe von p kleiner als das empirische p-Quantil ist und ein Anteil von 1-p der Stichprobe größer als das empirische p-Quantil ist. Der statistische Kennwert "Median" ist z.B. das p-Quantil für den Wert p=0,5 und teilt somit eine Stichprobe in zwei Hälften, wobei eine Hälfte kleiner als der Median und die andere Hälfte größer als der Median ist. Mithilfe des Medians kann, alternativ oder zusätzlich zur Bestimmung des Mittelwerts, die Lage eines Schwerpunkts von Prüfdaten ermittelt werden.

Ein p-Quantil kann unmittelbar für die der Auswertung zugrunde liegenden, noch nicht statistisch ausgewerteten Rohdaten ermittelt werden. Es ist auch möglich, die Errechnung eines p-Quantils für Prüfdaten anzuwenden, die in einer vorgelagerten Auswertungsstufe bereits statistisch ausgewertet wurden. Beispielsweise ist es möglich, eine Gesamtheit von Linien-Standardabweichungen zu analysieren und dafür wenigstens ein p-Quantil, z.B. den Median (Median von Linien-Standardabweichungen) zu ermitteln.

Alternativ oder zusätzlich kann wenigstens eine Untergruppe von Prüfdaten ausgewählt werden, die Flächenelemente repräsentieren, welche innerhalb eines zweidimensional ausgedehnten Teilbereichs des Oberflächenbereichs angeordnet sind, um daraus eine Bereichs-Standardabweichung der Prüfdaten zu ermitteln. Ein Teilbereich umfasst nur einen Bruchteil der zum gesamten Oberflächenbereich gehörenden Prüfdaten. Innerhalb des Teilbereichs liegen in zwei Dimensionen nebeneinander viele untersuchte Flächenelemente, deren Eigenschaften analysiert werden können.

Ein Riss oder ein "Hardspot", der sich nur sehr lokal ausgeprägt darstellt, kann ggf. wenn er so gering ausgeprägt ist, dass er bei einer normalen Prüfung die Schwellwerte nicht überschreitet, übersehen werden. Durch die Anwendung eines statistischen Vergleiches einer Region auf der Bildoberfläche zu dem restlichen Bild oder einer anderen Region kann dieser Fehler deutlicher zur Anzeige gebracht werden.

Alternativ oder zusätzlich können zwei Untergruppen von Prüfdaten ausgewählt werden, die Flächenelemente repräsentieren, welche zu zwei unterschiedlichen zweidimensional ausgedehnten Teilbereichen des Oberflächenbereichs gehören. Dann wird z.B. die Standardabweichung der Prüfdaten für jede der Untergruppen ermittelt, und zwar unabhängig voneinander. Danach werden die zu den Untergruppen gehörenden Standardabweichungen zur Ermittlung eines Standardabweichungs-Vergleichswerts verglichen. Die zu vergleichenden Teilbereiche können aufgrund von Algorithmen nach bestimmten Kriterien (z.B. die Standardabweichung dieser beiden Bereiche oder der Mittelwert der Standardabweichung) ausgesucht und z.B. auf ihr Rauschen untersucht und miteinander verglichen werden.

Gemäß einer Weiterbildung wird eine statistische Verteilung der Prüfdaten aus dem Oberflächenbereich ermittelt und mit einer Referenz-Verteilung verglichen, die der statistischen Verteilung eines Gutteils entspricht. Für den Vergleich kann mindestens ein statistischer Kennwert des Prüflings mit einem korrespondierenden statistische Kennwert des Gutteils verglichen werden. Der Begriff "Gutteil" bezeichnet hierbei einen Prüfling, der im Hinblick auf die untersuchte Eigenschaft akzeptabel ("in Ordnung, "IO") ist, beispielsweise weil oberflächennahe Ungänzen, wie beispielsweise Oberflächenrauheit und/oder Schleifbrand deutlich unterhalb eines kritischen Maßes liegen. Dadurch kann eine Ja/Nein-Entscheidung zwischen Gutteilen und "Schlechtteilen" getroffen werden, also solchen Bauteilen, die nach dem zu prüfenden Kriterien nicht in Ordnung (NIO) sind.

Beispielsweise kann wenigstens ein Quantil vorgegeben werden und es kann die Überschreitung des vorgegebenen Quantils im Vergleich zu einem zu einem Gutteil gehörenden korrespondierenden Quantil geprüft werden. Beispielsweise kann das Überschreiten definierter Perzentile einer Grundgesamtheit von Prüfdaten für Flächenelemente im Vergleich zu entsprechenden Perzentilen von Gutteilen geprüft werden.

Die Anwendung einer einzigen der genannten Vorgehensweisen kann ausreichen. Vorzugsweise wird jedoch eine Kombination von zwei oder mehr der genannten statistischen Analysen vorgesehen. Das kann zweckmäßig sein, um die Aussagekraft der Ergebnisse zu verbessern.

Eine bildliche Darstellung des Prüfergebnisses kann vorgesehen sein. Eine bildliche Darstellung ist jedoch eine "rein" qualitative Darstellung für den Betrachter und hat in einem automatisierten Prüfverfahren insoweit keine Relevanz, als die Entscheidung ob "gut" oder "schlecht" von der Auswertesoftware getroffen werden muss. Eine bildliche Darstellung hat sich aber als nützlich ergeben, da viele Prozessingenieure in der Produktion es vorziehen, die aufgenommen Daten noch optisch zu sehen.

In vielen Fällen ist im Rahmen der Aufbereitung der von der Prüfsonde gelieferten Prüfsignale wenigstens eine Filterung der Prüfsignale und/oder der daraus abgeleiteten Prüfdaten vorgesehen. Vorzugsweise wird eine nachgelagerte digitale Filterung durchgeführt. Dazu werden vorzugsweise Rohdaten in der Hardware nicht oder kaum gefiltert, um die Rohdaten als im Wesentlichen ungefilterte Rohdaten mit möglichst hohem Informationsgehalt in die Software zu bringen, um eine software-basierte digitale Filterung durchzuführen. Ein Problem bei der Filterung ist grundsätzlich, dass hier bereits Informationen verloren gehen können, die ggf. für die Auswertung relevant sind. Wird die Filterung überwiegend oder ausschließlich softwareseitig realisiert, kann ungewolltem Informationsverlust entgegengewirkt werden.

Die statistische Analyse kann bei der Auswertung von Prüfdaten unterschiedlichen technischen Ursprungs und unterschiedlicher technischer Aussage angewendet werden, beispielsweise auf ortsabhängige Prüfdaten aus Messungen des Ultraschalls, des Barkhausenrauschens, auf Prüfdaten aus einer Leitfähigkeitsmessung, einer E-Modul-Messung, einer Härtemessung o.dgl.

Bei einer bevorzugten Variante handelt es sich bei dem Prüfverfahren um ein Wirbelstrom-Prüfverfahren, also um ein Prüfverfahren, bei dem eine Prüfsonde in Form einer Wirbelstromsonde verwendet wird und bei dem dementsprechend die Prüfsignale Signale der Wirbelstromsonde (d.h. Wirbelstromsignale) sind. Die Prüfdaten können z.B. die Amplituden der Wirbelstromsignale oder deren Phase repräsentieren oder daraus abgeleitet sein. Die Wirbelstromsonde kann als Absolutsonde, als Differenzsonde oder als Kombination aus Absolutsonde und Differenzsonde ausgelegt sein.

Eine Wirbelstromsonde umfasst eine oder mehrere Erregerspulen, die zur Durchführung der Prüfung an einer Wechselspannungsquelle angeschlossen werden und dann ein hochfrequentes elektromagnetisches Wechselfeld erzeugen können, welches bei der Prüfung in das Prüfmaterial eindringt und im Wesentlichen in einer oberflächennahen Schicht des Prüfmaterials Wirbelströme erzeugt, die durch Gegeninduktion auf ein oder mehrere Empfängerspulen der Wirbelstromsonde zurückwirken. Erregerspulen und Empfängerspulen können aus Draht gewickelt oder in Schichttechnik hergestellt sein. Ein Defekt im geprüften Bereich, beispielsweise ein Riss, eine Verunreinigung oder eine andere Materialinhomogenität, stört die Ausbreitung der Wirbelströme im Prüfmaterial und verändert somit die Wirbelstromintensität und dadurch auch die Intensität des auf die Messspule rückwirkenden magnetischen Sekundärfeldes. Die dadurch verursachten Impedanzänderungen in einer Empfängerspule führen zu elektrischen Messsignalen (den Wirbelstromsignalen), die ausgewertet werden können, um Defekte zu identifizieren und zu charakterisieren. Die Wirbelstromsonde wird meist in einem geringen Prüfabstand zu einer zu prüfenden Oberfläche geführt, so dass berührungslos geprüft wird. Da die Wirbelstromprüfung besonders hohe Empfindlichkeit für oberflächliche oder oberflächennahe Ungänzen bietet, kann z.B. Schleifbrand sehr empfindlich detektiert werden.

Besondere Vorteile ergeben sich bei manchen Verfahrensvarianten dadurch, dass die Wirbelstromsonde zur Generierung von frequenzabhängigen Prüfdaten mit Wechselstrom einer ersten Prüffrequenz und mindestens einer unterschiedlichen zweiten Prüffrequenz betrieben wird und eine frequenzabhängige Auswertung für Prüfdaten erfolgt. Eine derartige Wirbelstromprüfung mit unterschiedlichen Frequenzen kann vorteilhaft sein, da die erzielbare Prüftiefe bei der Wirbelstromprüfung abhängig von der Prüffrequenz ist, wobei bei höheren Prüffrequenzen die Wirbelstromsignale eher aus näher an der Oberfläche liegenden Volumenanteilen stammen, während tiefere Frequenzen auch eine Wirbelstromprüfung bis in tiefer liegende Schichten erlaubt. Somit können bestimmte Tendenzen bei der statistischen Analyse abhängig von der Prüftiefe analysiert werden, um beispielsweise festzustellen, ob bestimmte Tendenzen bei höheren Frequenzen deutlich stärker auftauchen als bei niedrigeren Frequenzen, was auf relativ oberflächennahe Ungänzen schließen lässt. Hierdurch kann beispielsweise Schleifbrand von anderen Ungänzen unterschieden werden.

Bei einer Weiterbildung werden bei der frequenzabhängigen Auswertung der Prüfdaten für eine Vielzahl von Flächenelementen jeweils zugeordnete Differenzdaten ermittelt, die eine Differenz zwischen zur ersten Prüffrequenz gehörenden ersten Prüfdaten und zur zweiten Prüffrequenz gehörenden zweiten Prüfdaten repräsentieren, wobei aus den Differenzdaten wenigstens ein statistischer Kennwert ermittelt wird. Dadurch können z.B. Eigenschaften tiefer liegender Schichten mit Eigenschaften höher liegender Schichten verglichen werden.

Die Erfindung bezieht sich auch auf ein Prüfsystem zur zerstörungsfreien Prüfung eines Prüflings. Das Prüfsystem hat wenigstens eine Prüfsonde zur Erzeugung von Prüfsignalen. Weiterhin ist eine Scaneinrichtung vorgesehen, die derart konfiguriert ist, dass eine Oberfläche des Prüflings in einem Oberflächenbereich zur Erfassung von ortsabhängigen Prüfsignalen mittels der Prüfsonde abtastbar ist. Eine Auswertungseinrichtung ist dazu konfiguriert, aus den Prüfsignalen für eine Vielzahl von Flächenelementen des Oberflächenbereichs eine entsprechende Vielzahl zugeordneter Prüfdaten zu ermitteln und Prüfdaten aus dem Oberflächenbereich zur Charakterisierung wenigstens einer prüfrelevanten Eigenschaft des Prüflings auszuwerten. Ein Prüfsystem gemäß der beanspruchten Erfindung zeichnet sich dadurch aus, dass die Auswertungseinrichtung ein Statistikmodul zur statistischen Analyse der Prüfdaten umfasst, wobei das Statistikmodul konfiguriert ist, bei der statistischen Analyse aus den ortsabhängig ermittelten Prüfdaten für eine Vielzahl von Flächenelementen innerhalb des Oberflächenbereichs wenigstens einen statistischen Kennwert zu ermitteln. Weiterhin ist eine Ausgabeeinrichtung des Prüfsystems zum Ausgeben des statistischen Kennwerts oder einer daraus abgeleiteten Information zur Charakterisierung des Prüflings konfiguriert.

Das Statistikmodul kann in Form eines entsprechenden Softwaremoduls vorliegen, das in eine Auswertesoftware implementiert werden kann, um einen Computer in die Lage zu versetzen, die Auswertung des Prüfverfahrens auszuführen.

Vorzugsweise handelt es sich bei dem Prüfsystem um ein Wirbelstrom-Prüfsystem, bei dem mindestens eine Prüfsonde in Form einer Wirbelstromsonde zur Prüfung verwendet wird.

Die Erfindung betrifft auch ein Computerprogrammprodukt, das direkt in den internen Speicher eines digitalen Datenverarbeitungssystems geladen werden kann und Softwarecodeabschnitte umfasst, die ein Statistikmodul bilden und mit denen die Schritte des Prüfverfahrens ausgeführt werden, wenn das Computerprogrammprodukt auf einem Computer läuft. Das Computerprogrammprodukt kann auf einem computerlesbaren Medium gespeichert sein oder in Form von Signalen vorliegen, die den Programmcode repräsentieren.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt schematisch ein Wirbelstromprüfsystem zur scannenden zerstörungsfreien Prüfung eines Prüflings aus einem elektrisch leitfähigen Material;
- Fig. 2: zeigt schematisch ein C-Scan-Bild eines stark durch Schleifbrand beeinträchtigten Prüfteils, das nach der Messwertschwellen-Methode als Ausschuss identifizierbar ist;
- Fig. 3: zeigt schematisch ein C-Scan-Bild eines relativ stark durch Schleifbrand beeinträchtigten Prüfteils, das nach der Messwertschwellen-Methode als Gutteil identifiziert werden würde;
- Fig. 4: zeigt für vier unterschiedlich stark von Schleifbrand beeinträchtigte Prüfteile eine auf einer statistischen Auswertung basierende grafische Übersicht der Prüfergebnisse.

### DETAILLIERTE BESCHREIBUNG DER AUSFÜHRUNGSBEISPIELE

Nachfolgend werden Ausführungsbeispiele der Erfindung erläutert, bei denen statistische Auswertemethoden für die Prüfung mittels Detektion und Charakterisierung von Oberflächeneigenschaften von Prüflingen mit Wirbelstromprüfsystemen verwendet werden.

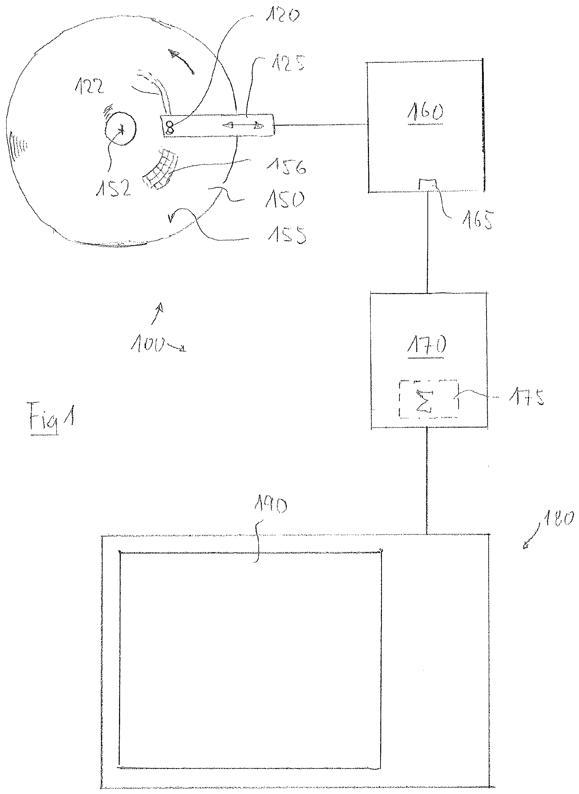

Die Fig. 1 zeigt hierzu schematisch ein als Wirbelstromprüfsystem ausgelegtes Prüfsystem 100 zur scannenden zerstörungsfreien Prüfung eines Prüflings 150, der aus einem elektrisch leitfähigen Material besteht. Bei dem Prüfling handelt es sich im Beispielsfall um ein Bauteil, welches eine in Bezug auf eine Symmetrieachse 152 im Wesentlichen rotationssymmetrische Gestalt aufweist. Die radial außen liegende Oberfläche 155 des Bauteils wurde in einer Vorbearbeitung durch Schleifen materialabtragend bearbeitet. Nun soll die rotationssymmetrische Oberfläche 155 des Bauteils im Wesentlichen lückenlos auf das Vorhandensein von funktionskritischem Schleifbrand untersucht werden.

Das Prüfsystem 100 umfasst wenigstens eine Prüfsonde 120 in Form einer Wirbelstromsonde. Die Wirbelstromsonde kann wenigstens eine Absolutspulenanordnung und/oder wenigstens eine Differenzspulenanordnung aufweisen und arbeitet als transformatorische Wirbelstromsonde in der Weise, dass die Kopplung zwischen Erregerspule(n) und Empfängerspule(n) über das geprüfte Bauteil erfolgt. Die Prüfsonde 120 ist an einem beweglichen Sondenträger 125 angebracht, der mittels eines nicht gezeigten Antriebs gesteuert bewegt werden kann.

Die Prüfsonde 120 ist elektrisch an ein Wirbelstrom-Prüfgerät 160 angeschlossen. Dieses enthält elektronische Einrichtungen zum Erzeugen der für das Betreiben der Prüfsonde 120 erforderlichen Wechselspannung sowie elektronische Einrichtungen zur Auswertung der von der Prüfsonde gelieferten elektrischen Prüfsignale, die auch als Wirbelstromsignale bezeichnet werden. Beispielsweise können die Signale hinsichtlich ihrer Amplitude und/oder hinsichtlich ihrer Phase ausgewertet werden. Das Wirbelstromprüfgerät umfasst auch Filtereinrichtungen, um die Prüfsignale nach bestimmten Kriterien zu filtern und für eine nachgeschaltete Auswertung aufzuarbeiten.

Das Prüfsystem 100 umfasst eine Scaneinrichtung, die es ermöglicht, dass die Oberfläche 155 des Prüflings zumindest in einem Oberflächenbereich zur Erfassung von ortsabhängigen Prüfsignalen mithilfe der Prüfsonde 120 lückenlos abgetastet werden kann. Die Scaneinrichtung umfasst im Beispielsfall eine Rotiereinheit, die einen Rotationsantrieb aufweist und den Prüfling 150 für die Prüfung um die Symmetrieachse 152 rotiert, sowie eine Prüfsonden-Bewegungseinheit, die dazu konfiguriert ist, den Sondenträger 125 mit der davon getragenen Prüfsonde während der Rotation des Bauteils so zu bewegen, dass die Prüfsonde 120 nach und nach die komplette Oberfläche 155 des Prüflings abtasten kann. Die Prüfsonde tastet dabei die Prüflingsoberfläche entlang von Prüfspuren 122 ab. Die Scaneinrichtung wird so gesteuert, dass die Prüfspuren lückenlos aneinander liegen bzw. etwas überlappen, so dass die Prüflingsoberfläche lückenlos abgetastet wird, oder so abgetastet wird, dass die nicht überfahrenen Bereiche kleiner sind als der kleinste Fehler, der gefunden werden soll.

Die vom Wirbelstromprüfgerät 160 aufbereiteten Prüfsignale werden über eine Schnittstelle 165 an eine angeschlossene rechnergestützte Auswertungseinrichtung 170 übertragen. Diese ist dazu eingerichtet, aus den Prüfsignalen für eine Vielzahl von Flächenelementen 156 des Oberflächenbereichs bzw. der Oberfläche 155 eine entsprechende Vielzahl zugeordneter Prüfdaten zu ermitteln und die Prüfdaten aus dem Oberflächenbereich zur Charakterisierung des Prüflings auszuwerten. Dabei wird wenigstens eine prüfungsrelevante Eigenschaft des Prüflings zur Charakterisierung des Prüflings ermittelt.

Vorzugsweise wird eine digitale Filterung mithilfe von Software verwendet. Dazu werden die Rohdaten in der Hardware nicht oder kaum gefiltert, um die Rohdaten möglichst in die Software zu bringen, um in der Software die Filterung durchzuführen. Das ermöglicht es z.B., die Daten mit verschiedenen Filtern digital zu bearbeiten und die verschieden gefilterten Datensätze (z.B. Bilder) unterschiedlich auszuwerten. So hat sich zum Beispiel gezeigt, dass man ganz anders filtern sollte, um Poren zu finden als um Risse zu finden. Weiterhin erlauben die ungefilterten Rohdaten eine spätere Analyse und Anpassung der notwendigen Filterstufen. Das Problem bei der Filterung ist grundsätzlich, dass hier bereits Informationen verloren gehen können, die ggf. für die Auswertung relevant sind. Wird die Filterung softwareseitig realisiert, kann ungewolltem Informationsverlust entgegengewirkt werden.

Ein großer Vorteil zeigt sich darin, dass mit verschiedenen Filtereinstellungen verschiedene statistische Auswertungen durchgeführt werden können. Beispielsweise kann man mit einer Filtereinstellung eher die Zeilenauswertung machen und mit einer anderen Filtereinstellung eher die Spaltenauswertung.

Im Beispielsfall ist die Prüfung darauf ausgelegt, festzustellen, ob an dem Prüfling Schleifbrand in einem die Funktion beeinträchtigenden Ausmaß vorliegt oder nicht. Als Ergebnis der Auswertung wird ausgegeben, ob das Prüfteil in Bezug auf vorgegebene Prüfkriterien als (für die bestimmungsgemäße Verwendung taugliches) Gutteil anzusehen ist oder ob das Ausmaß von Schleifbrand so gravierend ist, dass das Prüfteil als Schlechtteil aussortiert werden soll. Mithilfe der Ergebnisse der Auswertung kann eine entsprechende Sortiereinrichtung angesteuert werden.

Das Prüfsystem ist für eine benutzerfreundliche Visualisierung von Wirbelstromsignalen bei der Komponentenprüfung eingerichtet. Dazu ist ein Anteil der in der Auswertungseinrichtung 170 residierenden Auswertesoftware so ausgelegt, dass die ortsauflösend erfassten Wirbelstromsignale in einem übersichtlichen C-Scan an einem Bildschirm 190 einer angeschlossenen Bedien- und Anzeigeeinheit 180 angezeigt werden können. Der Begriff "C-Scan" steht in dieser Anmeldung für "Component Scan". Ein C-Scan zeigt z.B. die Mantelfläche des gescannten Bauteils mit Wirbelstromdaten in einem Bild. Die Software erlaubt auch eine nachgelagerte digitale Filterung. Durch die Visualisierung entsteht ein intuitiv erfassbares Bild der Oberflächenqualität der geprüften Komponente, durch das Oberflächenfehler genau lokalisiert werden können. Die Auswertesoftware ist unter anderem mit einem Mustererkennungs-Modul ausgestattet, mit dem über Mustererkennung bekannte Störkonturen am Bauteil wie beispielsweise Löcher oder Nuten ausgeblendet werden können. Eine Visualisierung der geprüften Oberfläche ermöglicht die intuitive Bewertung abstrakter Wirbelstromsignale.

Eine Prüfung auf das Vorhandensein von Schleifbrand kann beispielsweise so durchgeführt werden, dass die Amplitude oder die Phase der Wirbelstromsignale ausgewertet wird, indem geprüft wird, ob diese einen vorgegebenen Schwellwert überschreiten. Diese Methode kann verfeinert werden, indem der gesamte Prüfvorgang in einem C-Scan erfasst wird und die gesamten Prüfdaten verwendet werden, um das Bild digital nachzufiltern. Diese digitale Nachfilterung führt zu einem besseren Signal zu Rausch Verhältnis und somit zu einer besseren Entdeckungswahrscheinlichkeit.

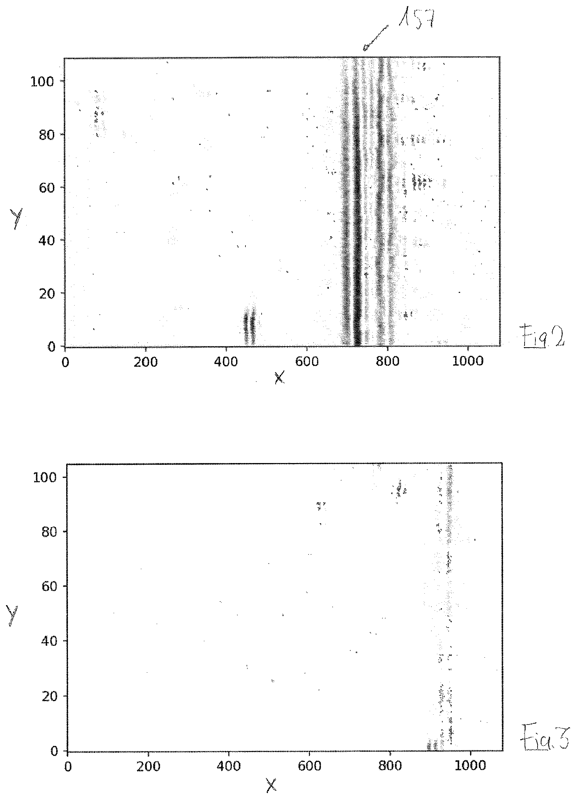

Die Fig. 2 zeigt schematisch ein C-Scan-Bild, das aus der Prüfung eines Bauteils resultiert, bei dem die Auswertung so erfolgte, dass diejenigen Flächenelemente dunkel hervorgehoben werden, bei denen eine definierte Messwertschwelle überschritten wurde. Das C-Scan-Bild entspricht im Wesentlichen einer Abwicklung der rotationssymmetrischen Prüflingsoberfläche, wobei die x-Achse der Umfangsrichtung und die y-Achse der Längsrichtung parallel zur Symmetrieachse des Bauteils entspricht. Bei dieser Prüfung ergibt sich u.a. im Bereich zwischen den Umfangspositionen x = 650 und x = 850 ein sich über die gesamte Länge erstreckender Oberflächenbereich 157 mit starken Messwertschwellenüberschreitungen, was auf eine starke Schädigung des Bauteils durch Schleifbrand hinweist.

Im Vergleich dazu zeigt Fig. 3 ein C-Scan-Bild eines Bauteils, welches nach einer unabhängigen anderen Prüfung (hier: Nitalätzung) hinsichtlich Schleifbrand ebenfalls stark auffällig war. Die einzelnen Effekte (vor allem im Umfangsbereich um ca. x = 900-950) waren jedoch so schwach, dass die Messwerte nicht über den definierten Schwellwert hinausgehen, so dass dieses Bauteil nach der Schwellwert-Methode als Gutteil klassifiziert werden würde.

Die Erfinder haben erkannt, dass eine Schwäche dieser Schwellwert-Methode darin liegt, dass die Gefügeveränderungen durch den Schleifbrand relativ stark sein müssen, um bei der Wirbelstromprüfung eine Messschwellenüberschreitung zu verursachen und dadurch als Veränderung der Oberfläche erkannt zu werden. Speziell bei der Anwendung von Differenz-Wirbelstromspulen, also bei der differenziellen Wirbelstromprüfung, ist auch zu beachten, dass diese dann besonders signifikante Prüfsignale liefert, wenn die beim Abscannen erfahrenen Oberflächenveränderungen relativ abrupt auftreten. Je stärker eine abrupte Oberflächeneigenschaftsänderung vorliegt, desto höher ist der Signalausschlag bei der differenziellen Wirbelstromprüfung und desto besser kann dies zu einer sicheren Anzeige gebracht werden.

Nicht selten ist es jedoch so, dass sich Schleifbrand großflächig oder vollflächig ausbildet in der Weise, dass keine scharfen Übergänge zwischen nicht oder nicht stark von Schleifbrand betroffenen Oberflächenbereichen und relativ stark oder extrem stark von Schleifbrand betroffenen Oberflächenbereichen existieren. Eine Detektion wird auch schwierig, wenn der Schleifbrand sich nur leicht abbildet und so schwach detektiert wird, dass eine vorgegebene Messwertschwelle nicht überschritten wird.

Ähnliche Bedingungen können bei anderen Fehlern auftreten, z.B. bei eher lokal auftretenden Gefügeänderungen, wie z.B. Hardspots oder Softspots, in deren Bereich das Material im Oberflächenbereich härter oder weicher als die Umgebung ist.

Unter anderem im Hinblick auf diese von den Erfindern erkannten Probleme haben die Erfinder Auswertemethoden entwickelt, welche die hier skizzierten Nachteile nicht aufweisen und unter anderem für die Detektion von Schleifbrand bestens geeignet sind.

Die Auswertung von Prüfsignalen wird dazu so ausgelegt, dass sie eine statistische Analyse der Prüfdaten umfasst, bei der aus den ortsabhängig ermittelten Prüfdaten für eine Vielzahl von Flächenelementen innerhalb des Oberflächenbereichs wenigstens ein statistischer Kennwert ermittelt wird und der statistische Kennwert oder eine daraus abgeleitete Information zur Charakterisierung des Prüflings ausgegeben wird. Dementsprechend enthält die Auswertungseinrichtung 170 ein mit Auswertesoftware arbeitendes Statistikmodul 175 zur statistischen Analyse der Prüfdaten, wobei das Statistikmodul so konfiguriert ist, dass die erwähnte statistische Analyse damit durchgeführt werden kann. Die Ausgabeeinrichtung 180 dient dann zum Ausgeben des statistischen Kennwerts oder einer daraus abgeleiteten Information zur Charakterisierung des Prüflings. Nachfolgend werden verschiedene Möglichkeiten der statistischen Analyse sowie eine beispielhafte, sehr instruktive grafische Aufbereitung der Analyseergebnisse erläutert.

In einer Versuchsreihe wurden vier unterschiedlich vorbearbeitete Prüfteile mithilfe des Prüfsystems überprüft. Die Prüfteile zeigten aufgrund unterschiedlicher Schleifbearbeitungen unterschiedliche Ausmaße von Schleifbrand. Das Ausmaß von Schleifbrand jedes Prüfteils war durch ein unabhängiges Prüfverfahren (durch Nitalätzung) vom Nutzer der Bauteile überprüft und die Bauteile entsprechend als Gutteil oder Ausschuss klassifiziert worden. Die Prüfteile mit Prüfteilnummer (PTN) 1 und 2 waren dabei als Gutteile mit relativ geringem Schleifbrand klassifiziert worden. Das Prüfteil mit Prüfteilnummer 3 zeigte Schleifbrand in sehr starkem Ausmaß, so dass das Bauteil als Ausschuss (nicht in Ordnung, NOK) klassifiziert wurde. Das Prüfteil mit Prüfteilnummer 4 zeigte ein relativ dazu geringeres Ausmaß an Schleifbrand, jedoch ausreichend stark, dass auch Prüfteil Nummer 4 als Ausschuss (NOK) klassifiziert wurde.

Die Prüfteile wurden auf identische Weise mithilfe eines Wirbelstromprüfsystems gemäß einem Ausführungsbeispiel der Erfindung geprüft. Dabei wurden gefilterte C-Scans aufgenommen, die ähnlich wie in Fig. 2 und 3 dargestellt eine Abwicklung der lückenlos geprüften Oberfläche zeigten. Der bildlichen Darstellung der Abwicklung lagen dabei gefilterte Prüfdaten zugrunde.

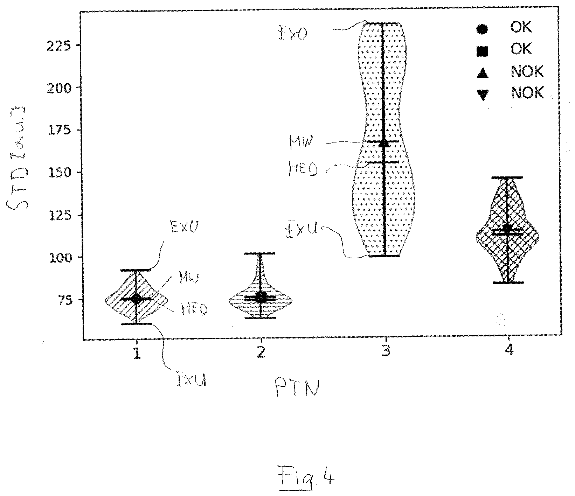

Fig. 4 zeigt eine grafische Übersicht der Prüfergebnisse aller Prüfteile, wobei jedes Prüfteil durch eine Verteilung von Linien-Standardabweichungen und mittleren Standardabweichungen der gefilterten C-Scans repräsentiert wird. Dabei ist auf der horizontalen Achse die Prüfteilnummer PTN aufgetragen, die vertikale Achse repräsentiert Standardabweichungen STD in willkürlichen Einheiten. Zur Ermittlung der der grafischen Repräsentation zugrunde liegenden statistischen Kennwerte wurde wie folgt vorgegangen.

Zunächst wurden die Prüfdaten jedes Prüfteils so gruppiert, dass Untergruppen (Stichproben) mit Prüfdaten von Flächenelementen entstanden, die einer Bildzeile in einer bildlichen Darstellung entspricht. Dabei wurden Prüfdaten zusammengefasst beurteilt, deren zugehörige Flächenelemente entlang einer geraden Linie innerhalb der Abwicklung des analysierten Oberflächenbereichs angeordnet sind. Der komplette analysierte zweidimensionale Oberflächenbereich wurde in Zeilen unterteilt. Die Anzahl der Flächenelemente pro Zeile kann z.B. im Bereich von 10² oder 103 bis zu 10⁶ (einer Million) oder darüber liegen. Die Anzahl der Zeilen kann z.B. im Bereich von 50 bis 100 liegen, ggf. auch darüber oder darunter.

Für jede der Zeilen wurde eine zugehörige Linien-Standardabweichung ermittelt. Diese entsprach der Standardabweichung der Prüfdaten innerhalb einer Linie bzw. Zeile. Für jedes Prüfteil wurde dann die Häufigkeitsverteilung der Linien-Standardabweichungen ermittelt. Diese sind in Fig. 4 in einer gemeinsamen grafischen Darstellung zusammengefasst. Eine zweckmäßige grafische Aufbereitung der Häufigkeitsverteilung der Linien-Standardabweichungen wird anhand der Darstellung für Prüfteil Nummer 1 näher erläutert. Eine senkrechte Linie wird am oberen und unteren Ende durch horizontale Linien begrenzt. Die obere horizontale Linie entspricht dem oberen betrachteten Extremwert EXO der Linien-Standardabweichungen, die untere horizontale Linie dem unteren betrachteten Extremwert EXU der Linien-Standardabweichungen. Die betrachteten Extremwerte können z.B. der Maximalwert und der Minimalwert der Linien-Standardabweichungen sein. Es ist auch möglich, ein niedriges p-Quantil (z.B. 0,01-Quantil oder 0,02-Quantil o.dgl. als den unteren Extremwert und ein hohes p-Quantil (z.B. 0,99-Quantil oder 0,98-Quantil o.dgl. als den oberen Extremwert zu wählen, um Ausreißer von der Auswertung auszuschließen. Es könnte ggf. auch sinnvoll sein, sich nur die "Ausreißer" anzuschauen und diesen Bereich im Bild als "schlechten Bereich" zu klassifizieren und gegen den Rest des Bildes als "guten Bereich" zu klassifizieren.

Zwischen den extremen Linien liegen zwei weitere horizontale Linien, wobei Linie MW dem arithmetischen Mittelwert und die Linie MED dem Median der Verteilung von Linien-Standardabweichungen entspricht. Diese Werte fallen beim Prüfteil Nummer 1 fast zusammen.

Zwischen dem oberen Extremwert EXO und dem unteren Extremwert EXU für die Linien-Standardabweichung ist zusätzlich eine zur vertikalen Linie spiegelsymmetrische Fläche (schraffiert) gezeigt, deren in x-Richtung angegebene Breite in Abhängigkeit vom Absolutwert der Linien-Standardabweichungen in charakteristischer Weise variiert. Die Breite dieser Fläche gibt für jede Linien-Standardabweichung die Häufigkeit an, mit der die entsprechende Linien-Standardabweichung bei der Analyse auftrat. Beim Prüfteil Nummer 1 war der Wert 75 für die Linien-Standardabweichung der häufigste Wert, die Häufigkeit nahm zu größeren und kleineren Werten etwa nach Art einer Normalverteilung stetig ab.

Bei dem ebenfalls als Gutteil klassifizierten Prüfteil Nummer 2 ergibt sich ein ähnliches Bild, wobei hier die absolute Differenz zwischen oberem und unterem Extremwert der Linien-Standardabweichung etwas größer war und der Mittelwert MW sowie der Median MED sichtbar auseinanderfallen.

Signifikant anders stellt sich die grafische Repräsentation der Werte des Prüfteils Nummer 3 dar, das als Ausschuss aufgrund starken Schleifbrands qualifiziert worden war. Hier ist die Differenz zwischen dem oberen Extremwert EXO und dem unteren Extremwert EXU der Linien-Standardabweichung deutlich größer als bei den Gutteilen. Weiterhin liegt das Absolutniveau der Linien-Standardabweichungen deutlich oberhalb derjenigen bei den Gutteilen. Dies ist erkennbar an der Lage des Mittelwerts MW, der bei etwa 170 liegt sowie des Medians MED, der leicht darunter bei etwa 150 liegt. Weiterhin auffällig ist, dass die Breite der schraffierten Fläche, die die Häufigkeitsverteilung der Linien-Standardabweichungen angibt, im mittleren Bereich eine Taille aufweist und zwischen dem mittleren Bereich und den Extremwerten jeweils Bäuche, so dass zwei lokale Maxima der Linien-Standardabweichungen identifizierbar sind.

Das ebenfalls als Ausschuss qualifizierte Prüfteil Nummer 4 zeigt im Vergleich zu den Gutteilen (Nummer 1 und 2) ebenfalls deutlich erhöhte Mittelwerte und Medianwerte für die Standardabweichung sowie eine größere Differenz zwischen dem oberen Extremwert EXO und dem unteren Extremwert EXU der Linien-Standardabweichung.

Einzelne oder mehrere der hier erwähnten Charakteristika dieser Häufigkeitsverteilungen von Linien-Standardabweichungen können dazu genutzt werden, Gutteile von Schlechtteilen zuverlässig zu unterscheiden. Zum Beispiel kann eine Sortiereinrichtung so eingerichtet sein, dass alle Prüfteile verworfen werden, bei denen der Mittelwert der Linien-Standardabweichungen bei der dortigen Skalierung den Wert von 100 übersteigt. Als Selektionskriterium können weiterhin die folgenden Parameter dienen: der Unterschied bzw. die Differenz zwischen Mittelwert MW und Median MED, die Differenz zwischen dem oberen Extremwert EXO und dem unteren Extremwert EXU der Linien-Standardabweichung, die Anzahl von Bäuchen in der Häufigkeitsverteilung der Linien-Standardabweichungen etc.

Es ist auch möglich, die Ähnlichkeit oder Unähnlichkeit zwischen der gemessenen Häufigkeitsverteilung der Linien-Standardabweichung (Breite der schraffierten Flächen) und einer allein auf statistischen Variationen beruhenden Normalverteilung zu quantifizieren und als Kriterium zu nutzen.

Das Ergebnis der Auswertung kann genutzt werden, um die Sortiereinrichtung anzusteuern, die die geprüften Teile in Gutteile und Schlechtteile sortiert. Die Sortiereinrichtung kann z.B. über eine intelligente digitale Schnittstelle angesprochen werden, z.B. Profinet, oder über einfache IO Signale, die in einer speicherprogrammierbaren Steuerung (SPS) verarbeitet werden.

Es ist auch möglich, die ermittelten statistischen Kennwerte oder daraus abgeleitete Daten über die Schnittstelle an die Sortiereinrichtung auszugeben. Diese Daten können dann dort weiterverarbeitet werden, um zum Beispiel damit einen SPC (Statistische Prozess Control) Chart zu füttern bzw. aufzubauen, der ein Maß dafür ist, ob der Prozess stabil läuft oder ob sich Parameter wegbewegen.

Anhand dieser wenigen Beispiele ist erkennbar, dass die Anwendung von statistischen Methoden in der Auswertung von C-Scan-Bildern in der Wirbelstromprüfung zur zuverlässigen Detektion von Oberflächeneigenschaften (Ungänzen) genutzt werden kann, insbesondere zur Detektion von Schleifbrand. Ein entsprechendes Prüfsystem kann mithilfe einer oder mehrerer Wirbelstromsonden, eines angeschlossenen Wirbelstromprüfgeräts sowie einer zugehörigen Auswertung realisiert werden. Die Auswertung kann in Form eines Statistikmoduls in einer Bildverarbeitungssoftware integriert sein. Das Statistikmodul kann unter anderem die beschriebenen Möglichkeiten zur statistischen Verarbeitung von Wirbelstromdaten in einem Bild bieten.

Weitere Abwandlungen des Prüfverfahrens sind ebenfalls möglich. Eine Veränderung im Rauschen, d.h. in der Standardabweichung innerhalb einer Bildzeile, kann eine Aussage darüber treffen, inwiefern das Wirbelstromsignal innerhalb dieser Zeile fluktuiert. Normale bzw. gute Prüfstücke (IO-Teile) weisen in der Regel eine sehr homogene Oberfläche auf. Ist diese gestört, deutet dies auf einen Fehler hin. Ein erhöhtes Rauschen nur einiger Bildzeilen kann darauf hindeuten, dass der Fehler nur lokal vorhanden ist. Dies kann z.B. noch kombiniert werden mit der Rauschinformation der Bildspalten, so das sich kreuzende Linien eines Linien-Netzes ausgewertet werden. Damit kann ggf. sogar die XY Position des Fehler im Bild bzw. im analysierten Oberflächenbereich bestimmt werden. Ein erhöhter Mittelwert im Rauschen aller Bildspalten oder Bildzeilen deutet darauf hin, dass die Schädigung im Prüfteil auf die ganze Oberfläche zurückzuführen ist. Diese Information kann für die Feststellung interessant sein, wo in der Produktionslinie der Fehler aufgetreten ist.

## Patentansprüche

1. Prüfverfahren zur zerstörungsfreien Prüfung eines Prüflings (150), bei dem eine Oberfläche (155) des Prüflings in einem Oberflächenbereich zur Erfassung von ortsabhängigen Prüfsignalen mittels wenigstens einer Prüfsonde (120) abgetastet wird, aus den Prüfsignalen für eine Vielzahl von Flächenelementen des Oberflächenbereichs eine entsprechende Vielzahl zugeordneter Prüfdaten ermittelt wird und
Prüfdaten aus dem Oberflächenbereich zur Charakterisierung wenigstens einer prüfrelevanten Eigenschaft des Prüflings (150) ausgewertet werden,
**dadurch gekennzeichnet, dass**
die Auswertung eine statistische Analyse der Prüfdaten umfasst, bei der aus den ortsabhängig ermittelten Prüfdaten für eine Vielzahl von Flächenelementen innerhalb des Oberflächenbereichs wenigstens ein statistischer Kennwert ermittelt und
der statistische Kennwert oder eine daraus abgeleitete Information zur Charakterisierung des Prüflings ausgegeben wird.

2. Prüfverfahren nach Anspruch 1, **dadurch gekennzeichnet, dass** bei der Auswertung wenigstens ein statistischer Kennwert ermittelt wird, der einer Standardabweichung (STD) der Prüfdaten aus dem Oberflächenbereich oder einer Untergruppe von Prüfdaten aus dem Oberflächenbereich entspricht.

3. Prüfverfahren nach Anspruch 1 oder 2, **gekennzeichnet durch** eine Auswertung wenigstens einer Untergruppe von Prüfdaten, die Flächenelemente repräsentieren, welche entlang einer Linie innerhalb des Oberflächenbereichs angeordnet sind, und eine Ermittlung einer Linien-Standardabweichung der Prüfdaten der Linie.

4. Prüfverfahren nach Anspruch 3, **dadurch gekennzeichnet, dass** für eine Vielzahl von nebeneinander verlaufenden Linien aus dem Oberflächenbereich jeweils eine Linien-Standardabweichung berechnet und eine daraus resultierende Gesamtheit von Linien-Standardabweichungen zur Ermittlung wenigstens eines statistischen Kennwerts ausgewertet wird, wobei vorzugsweise als statistischer Kennwert ein Mittelwert (MW) der Linien-Standardabweichungen und/oder ein Median (MED) der Linien-Standardabweichungen und/oder ein Minimalwert der Linien-Standardabweichungen und/oder ein Maximalwert der Linien-Standardabweichungen ermittelt und zur Charakterisierung des Prüflings ausgegeben werden.

5. Prüfverfahren nach Anspruch 4, **dadurch gekennzeichnet, dass** aus der Gesamtheit von Linien-Standardabweichungen eine Häufigkeitsverteilung der Linien-Standardabweichungen ermittelt und zur Charakterisierung des Prüflings ausgegeben wird, wobei vorzugsweise eine Ähnlichkeit oder Unähnlichkeit zwischen der für den Prüfling ermittelten Häufigkeitsverteilung der Linien-Standardabweichung und einer allein auf statistischen Variationen beruhenden Normalverteilung quantifiziert und zur Charakterisierung des Prüflings ausgegeben wird.

6. Prüfverfahren nach einem der vorhergehenden Ansprüche, **dadurch gekennzeichnet, dass** bei der Auswertung wenigstens ein statistischer Kennwert ermittelt wird, der einem Mittelwert (MW) der Prüfdaten aus dem Oberflächenbereich oder einer Untergruppe von Prüfdaten aus dem Oberflächenbereich entspricht und/oder dass bei der Auswertung wenigstens ein statistischer Kennwert ermittelt wird, der einem p-Quantil der Prüfdaten aus dem Oberflächenbereich oder einer Untergruppe von Prüfdaten aus dem Oberflächenbereich für wenigstens einen p-Wert entspricht.

7. Prüfverfahren nach einem der vorhergehenden Ansprüche, **dadurch gekennzeichnet, dass** die Auswertung wenigstens eine der folgenden Operationen umfasst:
(a) Auswerten wenigstens einer Untergruppe von Prüfdaten, die Flächenelemente repräsentieren, welche innerhalb eines zweidimensional ausgedehnten Teilbereichs des Oberflächenbereichs angeordnet sind, und Ermitteln einer Bereichs-Standardabweichung der Prüfdaten;
(b) Auswerten von zwei Untergruppen von Prüfdaten, die Flächenelemente repräsentieren, welche zu zwei unterschiedlichen zweidimensional ausgedehnten Teilbereichen des Oberflächenbereichs gehören, Ermitteln einer Bereichs-Standardabweichung der Prüfdaten für jede der Untergruppen und Vergleichen der zu den Untergruppen gehörenden Standardabweichungen zur Ermittlung eines Standardabweichungs-Vergleichswerts.

8. Prüfverfahren nach einem der vorhergehenden Ansprüche, **dadurch gekennzeichnet, dass** die Auswertung eine Ermittlung einer statistischen Verteilung der Prüfdaten aus dem Oberflächenbereich und einen Vergleich der statistischen Verteilung mit einer zu einem Gutteil gehörenden Referenz-Verteilung umfasst, wobei vorzugsweise für den Vergleich mindestens ein statistischer Kennwert des Prüflings mit einem korrespondierenden statistische Kennwert des Gutteils verglichen wird.

9. Prüfverfahren nach einem der vorhergehenden Ansprüche, **gekennzeichnet durch** wenigstens eine Filterung der Prüfsignale und/oder der daraus abgeleiteten Prüfdaten wobei vorzugsweise eine nachgelagerte digitale Filterung durchgeführt wird, insbesondere derart, dass Rohdaten in der Hardware nicht oder kaum gefiltert werden, so dass im wesentlichen ungefilterte Rohdaten vorliegen und eine digitale Filterung der im wesentlichen ungefilterten Rohdaten mithilfe von Software durchgeführt wird.

10. Prüfverfahren nach einem der vorhergehenden Ansprüche, **dadurch gekennzeichnet, dass** eine Prüfsonde (120) in Form einer Wirbelstromsonde (120) verwendet wird, wobei vorzugsweise die Wirbelstromsonde zur Generierung von frequenzabhängigen Prüfdaten mit Wechselstrom einer ersten Prüffrequenz und mindestens einer unterschiedlichen zweiten Prüffrequenz betrieben wird und dass eine frequenzabhängige Auswertung für Prüfdaten erfolgt, wobei vorzugsweise bei der frequenzabhängigen Auswertung der Prüfdaten für eine Vielzahl von Flächenelementen jeweils zugeordnete Differenzdaten ermittelt werden, die eine Differenz zwischen zur ersten Prüffrequenz gehörenden ersten Prüfdaten und zur zweiten Prüffrequenz gehörenden Prüfdaten repräsentieren und dass aus den Differenzdaten wenigstens ein statistischer Kennwert ermittelt wird.

11. Prüfsystem (100) zur zerstörungsfreien Prüfung eines Prüflings (150), umfassend:
wenigstens eine Prüfsonde (120) zur Erzeugung von Prüfsignalen;
eine Scaneinrichtung, die derart konfiguriert ist, dass eine Oberfläche (155) des Prüflings (150) in einem Oberflächenbereich zur Erfassung von ortsabhängigen Prüfsignalen mittels der Prüfsonde (120) abtastbar ist;
eine Auswertungseinrichtung (170), die konfiguriert ist, aus den Prüfsignalen für eine Vielzahl von Flächenelementen des Oberflächenbereichs eine entsprechende Vielzahl zugeordneter Prüfdaten zu ermitteln und Prüfdaten aus dem Oberflächenbereich zur Charakterisierung wenigstens einer prüfrelevanten Eigenschaft des Prüflings auszuwerten;
**dadurch gekennzeichnet, dass**
die Auswertungseirichtung (170) ein Statistikmodul (175) zur statistischen Analyse der Prüfdaten umfasst, wobei das Statistikmodul konfiguriert ist, bei der statistischen Analyse aus den ortsabhängig ermittelten Prüfdaten für eine Vielzahl von Flächenelementen innerhalb des Oberflächenbereichs wenigstens einen statistischen Kennwert zu ermitteln, und
eine Ausgabeeinrichtung (180) des Prüfsystems (100) zum Ausgeben des statistischen Kennwerts oder einer daraus abgeleiteten Information zur Charakterisierung des Prüflings konfiguriert ist.

12. Prüfsystem nach Anspruch 11, **dadurch gekennzeichnet, dass** die Auswertungseirichtung (170) zur Durchführung einer Auswertung gemäß einem der Ansprüche 1 bis 10 konfiguriert ist.

13. Prüfsystem nach Anspruch 11 oder 12, **dadurch gekennzeichnet, dass** das Prüfsystem (100) ein Wirbelstrom-Prüfsystem (100) ist, bei dem mindestens eine Prüfsonde (120) in Form einer Wirbelstromsonde (120) zur Prüfung verwendet wird, wobei vorzugsweise das Wirbelstrom-Prüfsystem als ein Mehrfrequenz-Prüfsystem konfiguriert ist, indem die Wirbelstromsonde zur Generierung von frequenzabhängigen Prüfdaten mit Wechselstrom einer ersten Prüffrequenz und mindestens einer unterschiedlichen zweiten Prüffrequenz betreibbar ist und die Auswerteeinrichtung (170) für eine frequenzabhängige Auswertung für Prüfdaten konfiguriert ist, wobei vorzugsweise bei der frequenzabhängigen Auswertung der Prüfdaten für eine Vielzahl von Flächenelementen jeweils zugeordnete Differenzdaten ermittelt werden, die eine Differenz zwischen zur ersten Prüffrequenz gehörenden ersten Prüfdaten und zur zweiten Prüffrequenz gehörenden Prüfdaten repräsentieren und dass aus den Differenzdaten wenigstens ein statistischer Kennwert ermittelt wird.

14. Computerprogrammprodukt, das auf einem Medium gespeichert oder in einem Signal verkörpert vorliegt und direkt in den internen Speicher eines digitalen Datenverarbeitungssystems geladen werden kann und Softwarecodeabschnitte umfasst, die ein Statistikmodul (175) bilden und mit denen die Schritte des Prüfverfahrens gemäß einem der Ansprüche 1 bis 10 ausgeführt werden, wenn das Computerprogrammprodukt auf einem Computer läuft.
